Europäisches Patentamt

European Patent Office

Office européen des brevets

(11) Publication number: **0 260 948 B1**

# EUROPEAN PATENT SPECIFICATION

(45) Date of publication of patent specification: **17.06.92**

(51) Int. Cl.⁵: **B29C 67/22**, B29C 47/00, //B29K105:04

(21) Application number: **87308193.9**

(22) Date of filing: **16.09.87**

(54) Process and apparatus for producing extruded thermoplastic foam bodies.

(30) Priority: **19.09.86 US 909442**

(43) Date of publication of application:
**23.03.88 Bulletin 88/12**

(45) Publication of the grant of the patent:
**17.06.92 Bulletin 92/25**

(84) Designated Contracting States:
**BE CH DE FR GB GR IT LI NL SE**

(56) References cited:
EP-A- 0 007 722
US-A- 4 473 665
US-A- 4 486 369

PATENT ABSTRACTS OF JAPAN, vol. 9, no.
184 (C-294), 30th July 1985, page 56 C 294; &
JP-A-60 052 575 (NITTO DENKI) 25-03-1985

PATENT ABSTRACTS OF JAPAN, vol. 9, no.
55 (M-362)[1778], 9th March 1985; & JP-A-59
190 835 (NITSUKUU KOGYO K.K.) 29-10-1984

(73) Proprietor: **THE DOW CHEMICAL COMPANY**
**2030 Dow Center Abbott Road P.O. Box 1967**
**Midland Michigan 48640-1967(US)**

(72) Inventor: **Suh, Kyung Won**
**1533 Welsh Hills Road**
**Granville Ohio 43023(US)**
Inventor: **Sakata, Norihiko**
**9-21 Yabase 3-chome**
**Suzuka-shi Mie Pref. 513(US)**

(74) Representative: **Burford, Anthony Frederick et al**
**W.H. Beck, Greener & Co. 7 Stone Buildings Lincoln's Inn**
**London WC2A 3SZ(GB)**

## Description

The present invention relates to controlled environment extrusion technology for producing extruded thermoplastic foam bodies and more particularly, to vacuum, steam or steam and vacuum extrusion processes and an apparatus for these processes.

Foamed bodies of a thermoplastic synthetic resin are produced generally by injecting a blowing agent into a molten resin within an extruder, cooling and kneading the mixture in the extruder to prepare a uniform composition having a melt viscosity suitable for foaming and extruding the composition from a die into the atmosphere to foam the molten thermoplastic resin by virtue of the difference between the vapor pressure of the blowing agent and the atmospheric pressure.

As is known, the formation of extruded foam bodies in the form of boards, planks, billets, etc., can be enhanced by the employment of a vacuum chamber wherein expansion of continuously extruded foamable material is accomplished under subatmospheric pressure. This, however, necessitates removal of the foamed extrudate from the vacuum chamber, and to do so without adversely affecting the reduced pressure controlled environment in such chamber has presented a difficult problem for solution.

One known solution to this problem involves the employment of an inclined barometric leg which permits continuous removal of the extrudate from a vacuum chamber at the top of the leg in either continuous or discrete lengths to the atmosphere without affecting the reduced pressure within the vacuum chamber. For further details of this technique, reference may be had to U.S. Patents 3,704,083; 4,044,084; 4,199,310; and 4,271,107.

Another solution to the extraction problem is set forth in U.S. Patent 4,487,731. This solution generally involves the continuous extrusion of foamable material into a reduced pressure chamber or zone, cutting the foamed extrudate to length in such reduced pressure chamber, transferring the cut length into a second contiguous chamber or zone which cyclically alternates between such reduced pressure and atmospheric pressure, such transfer being effected when the second chamber is at reduced pressure, and then discharging the cut length from the second chamber to the atmosphere when such second chamber is at atmospheric pressure. This extraction procedure requires a large number of vacuum cycles per hour in order to achieve a desired level of output.

U.S. Patent 4,486,369 provides for continuous extrusion of material, such as foam, into a controlled environment, such as a vacuum chamber or zone at reduced pressure, and cutting the extrudate to length within such vacuum chamber. The cut lengths are extracted from the vacuum chamber by inventorying a plurality of the cut lengths in an extraction chamber or zone then at reduced pressure and thereafter discharging the inventory from the extraction chamber to the atmosphere without affecting the reduced pressure in the vacuum chamber. This extraction procedure decreases the number of required vacuum cycles due to the discharging at atmospheric pressure of a plurality of cut lengths, or boards.

JP-A-6052575 (Patent Abstracts of Japan, Vol. 9, No. 184 [C-294], 30th July 1985, page 56 C 294; NITTO DENKI) discloses apparatus for the continuous vacuum treatment of film. In use, the film to be treated is passed from a roller through a first chamber, a preliminary vacuum chamber, a central vacuum treating chamber having a treatment roll, a second preliminary vacuum chamber and a final chamber in turn before leaving the apparatus to be stored on a take-up roller. The first and final chambers are both fluid-filled in use, and the purpose of these chambers is stated to be to prevent oscillation of the film and so reduce damage thereof. The English langauge abstract corresponding to the Japanese publication makes no reference whatsoever to extrusion processes.

The process of the present invention is characterized by continuously extruding a foamable thermoplastic resin into a first zone at subatmospheric pressure to form a continuous extruded thermoplastic foam body. The first zone has a liquid removal means and a seal means for entry into a second zone. The continuous thermoplastic foam body is passed from the first zone to the second zone through the seal means. The second zone is a liquid reservoir, with the liquid open to the atmosphere and present in such volume to completely submerge the seal means. Liquid leaks between the seal means and the continuous extended thermoplastic foam body into the first zone and is removed therefrom by said liquid removal means. The continuous extruded thermoplastic foam body is then passed from the second zone to the atmosphere.

The process of the present invention is advantageously practiced with the apparatus of the present invention. Such an apparatus comprises a first chamber, means to extrude a foamable thermoplastic resin into the first chamber to form a continuous extruded thermoplastic foam body and means to maintain the first chamber at subatmospheric pressure. The first chamber has a means for liquid removal and a seal means for passing the continuous extruded thermoplastic foam body from the first chamber to a liquid reservoir. The liquid reservoir has the liquid open to the atmosphere and the liquid present in such volume

EP 0 260 948 B1

so as to completely submerge the seal means. After entering the liquid reservoir, there is a means for passing the continuous extruded thermoplastic foam body from the liquid reservoir to the atmosphere.

The process and apparatus of the present invention provide a subatmospheric pressure for the expansion of a continuously extruded thermoplastic foam body where the subatmospheric pressure is easily maintained even with continuous removal of the extruded thermoplastic foam body from a zone of subatmospheric pressure, and the subatmospheric pressure is independent of the liquid level in the zone of subatmospheric pressure.

In the Drawings

Figure 1 is a schematic view illustrating one embodiment apparatus for carrying out a method according to the invention;

Figure 2 is a schematic view illustrating a second embodiment apparatus for carrying out a method according to the invention;

Figure 3 is a side view illustrating a third embodiment apparatus for carrying out a method according to the invention; and

Figure 4 is a top view of Figure 3 and also illustrates liquid recirculation.

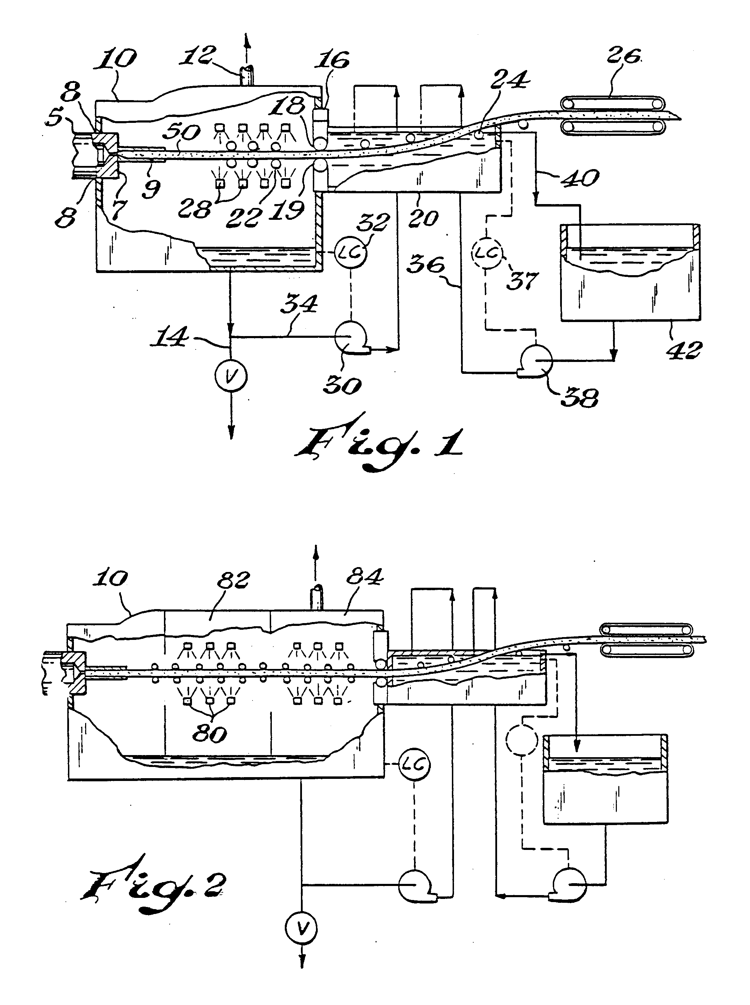

Referring to Figure 1, the extruded partially represented by 5, is coupled to an extrusion die 7 in such a way so that the foamable thermoplastic resin leaving the extrusion die enters the first zone 10 which is at subatmospheric pressure. Entry by the foamable thermoplastic resin into the first zone at subatmospheric pressure must be through appropriate vacuum seals 8 so as to prevent vacuum leaks.

Vacuum will be applied and maintained in the first zone through connection 12 with a suitable vacuum device, such as a pump.

The continuous extruded thermoplastic foam body (foamed extrudate) 50 may be shaped in a forming section 9 after leaving the extrusion die and prior to entering the first zone at subatmospheric pressure. The forming section may be parallel belts, parallel plates or other appropriate dies, devices or machinery.

The foamed extrudate will have a conveyor assembly 22 to guide and optionally transport the foamed extrudate away from the extrusion die and forming section. Such conveyor assembly is constructed of rollers, endless belts or the like, and may be rotatably driven to advance the foamed extrudate through the first zone at subatmospheric pressure.

The foamed extrudate is optionally cooled by a fluid spray 28 so that the foamed extrudate is sufficiently rigid to withstand the pressure difference across the seal means which could cause foam collapse and the frictional and pull force exerted by the seal means which could cause foam breakage. This optional cooling will not be necessary if the foamed extrudate is sufficiently rigid due to the distance the foamed extrudate must travel in the first zone at subatmospheric pressure.

Seal means 16 are used to remove the foamed extrudate from the first zone at subatmospheric pressure into the second zone 20. The seal means must provide a satisfactory vacuum seal and a low frictional force.

In the case of a continuous foamed extrudate in the shape of a board having two major faces substantially parallel to each other and two minor faces also substantially parallel to each other, the seal means includes sealing elements 18 and 19 for the two major faces and other sealing elements for the minor faces of the foamed extrudate.

The sealing elements are rollers, roller conveyors, moving belts or belt conveyors which are mechanically spring loaded or pneumatically operated and which sealing elements extend through the seal between the first zone and the second zone.

Preferably, the two major faces of the foamed extrudate are supported and guided between two belt conveyors which are rotatably driven to convey the foamed extrudate from the first zone at subatmospheric pressure to the second zone. Optionally, one or both belt conveyors will have a means for moving the sealing element normal to a plane of the belt in contact with the foamed extrudate. This ability to move will minimize leakage from the second zone into the first zone at subatmospheric pressure and will accommodate thickness variations between the two substantially parallel major faces of the foamed extrudate. To further decrease leakage belt follower plates may optionally be used.

Preferably, the sealing element for the two minor faces of the foamed extrudate is an inflatable roller or a cam seal.

An inflatable roller is constructed of a hard material on both ends of the rollers so as to fit intimately with the belt conveyors, thus minimizing leakage through the belt conveyors, and a pliable inflatable skin between the hard material ends of the roller to maintain intimate contact with the two minor faces of the foamed extrudate. This pliable inflatable skin will also compensate foamed extrudate width changes, the

3

width being the distance between the two substantially parallel minor faces of the foamed extrudate. To minimize leakage around the pliable inflatable skin, a means for sealing the pliable inflatable skin while still allowing free movement of the inflatable roller is necessary. Such a means for sealing is generally placed on the side of the inflatable roller opposite the minor faces of the foamed extrudate. One example of such a sealing means is a rigid steel roller housed snugly in a frame.

A cam seal for the minor faces of the foamed extrudate has a stack of cam followers which contact the belt conveyors and the minor faces of the foamed extrudate, move independently about a pivot shaft and are housed in a frame which minimizes leakage at points substantially opposite the minor face of the foamed extrudate.

While specific sealing elements for the major and minor faces of the foamed extrudate have been described, such descriptions are illustrative and not intended to be limiting as to the seal means employed in passing the foamed extrudate from the first zone at subatmospheric pressure to the second zone.

After passing the foamed extrudate through the seal means, the foamed extrudate enters the second zone 20. The second zone is a liquid reservoir, with the liquid open to the atmosphere and the liquid present in such volume so as to completely submerge the seal means. More particularly, the liquid is present in such volume so as to completely submerge the sealing elements in intimate contact with the major and minor faces of the foamed extrudate.

Preferably, the liquid is water. Introduction of a liquid as opposed to the atmosphere around the sealing elements of the seal means will allow for a controlled and manageable leak rate of liquid from the second zone 20 into the first zone 10 at subatmospheric pressure.

Liquid that does enter the first zone through the sealing elements will fall to the lowest point of the first zone, and excessive accumulation of liquid will be prevented by a liquid removal means, such as a drain 14 or a recirculation system 34.

Preferably, the liquid removal means is a recirculation system which would include a level control switch 32 for the liquid level in the first zone, piping to carry the liquid from the first zone to a pump 30 and piping from the pump to the second zone 20.

Optionally, the second zone can include a liquid supply tank 42. This liquid supply tank will accept water in excess of the level desired 40 in the second zone, and will supply liquid 36 to the second zone as a level control switch 37 for the second zone is activated. The liquid will be supplied by pump 38 and the appropriate piping from the liquid supply tank to the pump and from the pump to the second zone.

The foamed extrudate is removed from the second zone. This removal of foamed extrudate is optionally assisted by support means 24, for example, rollers, conveyors or a ramp in the second zone, and a foamed extrudate pulling means 26, for example, rotatably driven belt conveyors.

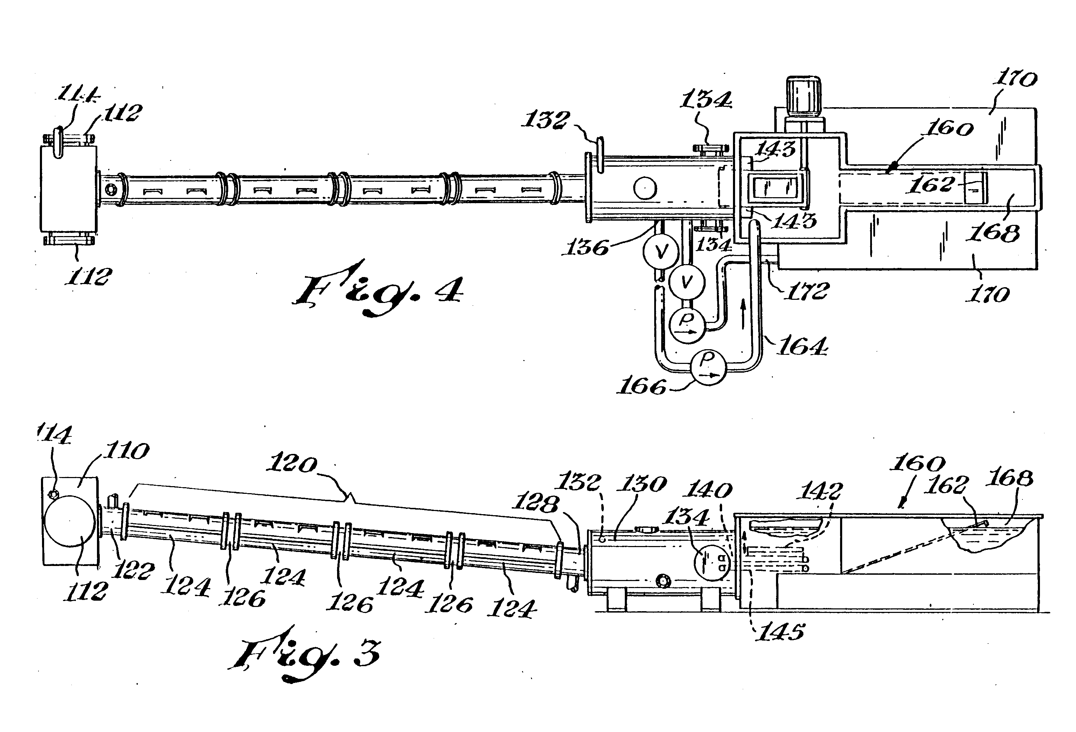

In Figure 2, an alternative embodiment of the present invention, a heated gas 80 is also introduced into the first zone and, more particularly, sprayed on the foamed extrudate to further expand the foamed extrudate. The heated gas is preferably steam. Optionally, the first zone 10 can be physically or functionally divided into a separate heating zone 82 and a separate cooling zone 84 both of which are maintained at subatmospheric pressure.

In Figure 3, the extrusion die is enclosed by a die housing 110 able to be maintained at subatmospheric pressure. Access to the extrusion die is through one or more access ports 112, and the process may be viewed through one or more viewing ports 114 both located on the die housing.

From the die housing the foamed extrudate is passed to the vacuum chamber 120 which is attached to the die housing by an angled spool piece 122. The vacuum chamber is linear sections 124 joined by spool pieces 126. The linear sections preferably have a hinged portion for easy opening and access to the process and the hinged portion has an inflatable rubber seal or other sealing means to allow vacuum operation. Heated gas, such as steam, and cooling fluid, such as water, can be supplied at any point within the vacuum chamber through inlet nozzles, emitters, sprayers or the like.

The foamed extrudate is then passed from the vacuum chamber to a vacuum tank 130. The vacuum chamber is attached to the vacuum tank by another angled spool piece 128. Again, a viewing port 132 and access ports 134 are located on the vacuum tank.

The foamed extrudate is passed to upper 140 and lower 145 belt conveyors which are the sealing elements for two of the faces of the foamed extrudate located between the belt conveyors. The lower belt conveyor is rigidly held in place, while the upper belt conveyor will move slidably normal to the plane of the belt to adjust for the thickness of the foamed extrudate. For example, the upper belt conveyor is supported by a frame 142 connected to air cylinders. Belt conveyor rotation is provided by a rotating means such as a motor, which rotates one or more rollers on which the belt rests. Also, leakage of liquid past the upper belt conveyor may be minimized by an adjustable follower plate.

Side sealing elements are as previously described.

The vacuum tank is connected to the liquid reservoir 160 and the foamed extrudate is passed from the vacuum tank to the liquid reservoir through the sealing elements.

The foamed extrudate is then passed through the liquid in the liquid reservoir and passed up the exit ramp 162 to the atmosphere. Figure 4 is an illustrative top view of Figure 3 and includes the liquid removal means 136 from the vacuum tank. This removed liquid is recirculated into the liquid reservoir through a liquid entry by means of piping 164 and a pump 166. Also, as can be seen in Figure 4, the foamed extrudate traveling through the liquid up the exit ramp 162 will emerge into the atmosphere, dripping liquid, prior to leaving the tank perimeter. This dripping liquid from the foamed extrudate enters a liquid supply tank, 170, through an opening 168. Piping 172 from the liquid supply tank 170 to the vacuum tank 130 will allow for liquid from the liquid supply tank to enter the vacuum chamber and thus the liquid reservoir.

Operating conditions for the first zone are a subatmospheric pressure of from 1 to 14.7 pounds psig (7 to 100 kPa) and a temperature of from 20°C to 5 to 10°C greater than the softening point of the glassy polymers or crystallization temperature of the crystalline thermoplastic polymers. Preferably, the subatmospheric pressure is from 3 to 10 psig (20-70 kPa) and the temperature is from 30°C to the softening point of crystallization temperature of the thermoplastic resins.

Thermoplastic resins used in the process of the present invention are not particularly limited but include various homopolymers and copolymers. These include, but are not limited to, styrenic polymers, olefinic polymers and other thermoplastic polymers that are extrudable.

Useful blowing agents are not limited either and include those compounds which are gas or liquid in a normal state and those blowing agents which are thermally decomposable.

## Example 1

An extruded thermoplastic foamed body is made according to the process of the present invention using the apparatus of the present invention.

A polystyrene with a weight average molecular weight of about 200,000 is fed to a 2½ inch (6.4 cm) extruder at a rate of about 100 pounds (45 kg) per hour and melted.

Dichlorodifluoromethane at a rate of about 11.0 parts per hundred of polystyrene by weight is injected into the molten polystyrene and mixed.

This mixture is then passed through a slit extrusion die and then expanded and formed between substantially parallel plates in the first zone at subatmospheric pressure. The extrusion die pressure is from 500 to 800 psig (3.5-5.6 MPa) and the foaming temperature is from 129 to 134°C. The expanded foam is then cooled with a water spray, passed through the seal means into the water reservoir and removed from the water reservoir. The extruded foamed body has a thickness of about one inch (2.5 cm).

Table I illustrates further conditions and the results of four runs.

## TABLE I
## EFFECT OF VACUUM EXPOSURE

| Run Number | 1 | 2 | 3 | 4* |
|---|---|---|---|---|
| Vacuum psig (kPa) | 8.2 (56.5) | 11.0 (75.8) | 12.7 (87.6) | 14.7 (101) |
| Line Speed ft/min (m/min) | 15 (4.6) | 15 (4.6) | 15 (4.6) | 15 (4.6) |
| Cross-sectional Area in$^2$ (cm$^2$) | 7.9 (51) | 7.6 (49) | 5.6 (36.1) | 5.0 (32.3) |
| Density lbs/ft$^3$ (kg/m$^3$) | 2.08 (3.33) | 2.58 (4.13) | 2.97 (4.76) | 3.32 (5.32) |
| Cell Size (millimeters) | | | | |
| V (vertical or thickness) | 1.12 | 1.16 | 1.30 | 1.20 |
| H (horizontal or width) | 1.16 | 1.08 | 1.12 | 1.08 |
| E (extrustion or longitudinal) | 1.62 | 1.54 | 1.54 | 1.95 |

*No vacuum utilized, not an example of the present invention.

Example II

Example 1 is repeated with the addition of steam as a heated gas into the first zone at subatmospheric pressure.

Table II illustrates conditions and results for the four runs of this example.

6

## TABLE II
### EFFECT OF CONCURRENT STEAM AND VACUUM EXPOSURE

| Run Number | 5* | 6 | 7 | 8 |
|---|---|---|---|---|
| Steam Exposure Time (seconds) | 88 | 88 | 88 | 88 |
| Steam Regulator Pressure psig (kPa) | 12 (184) | 12 (184) | 12 (184) | 12 (184) |
| Vacuum psiq (kPa) | 14.7 (101) | 12.8 (88.3) | 11.0 (75.8) | 8.2 (56.5) |
| Line Speed ft/min m/min | 15 (4.6) | 15 (4.6) | 15 (4.6) | 15 (4.6) |
| Cross-sectional Area $in^2$ $(cm^2)$ | 6.3 (40.6) | 6.3 (40.6) | 6.5 (41.9) | 7.9 (51) |
| Density $lbs/ft^3$ $(kg/m^3)$ | 2.68 (4.29) | 2.71 (4.34) | 2.97 (3.97) | 2.08 (3.33) |
| Cell Size (millimeters) | | | | |
| V (vertical or thickness) | 1.12 | 1.25 | 1.12 | .98 |
| H (horizontal or width) | 1.05 | 1.30 | 1.30 | 1.20 |
| E (extrustion or longitudinal) | 2.43 | 2.12 | 1.54 | 2.12 |

**\*No vacuum utilized, not an example of the present invention.**

As can be seen in Examples 1 and 2, steam and moderate vacuum conditions produce a lower density foam than a foam produced only under a moderate vacuum condition.

Although the invention has been shown and described with respect to certain embodiments, it is obvious that equivalent alterations and modifications will occur to others skilled in the art upon the reading and understanding of this specification. The present invention includes all such equivalent alterations and modifications, and is limited only by the scope of the claims.

**Claims**

1. A process for producing a thermoplastic foam body comprising the steps:

   (a) extruding continuously a foamable thermoplastic resin into a first zone (10) at subatmospheric pressure to form a continuous extruded thermoplastic foam body (50), the first zone (10) having a liquid removal means (14, 34) and a seal means (16) for entry into a second zone (20);

   (b) passing the continuous extruded thermoplastic foam body (50) from the first zone (10) at subatmospheric pressure to the second zone (20) through the seal means (16), the second zone (20) being a liquid reservoir, with the liquid open to the atmosphere, and the liquid present in such volume so as to completely submerge the seal means (16) whereby liquid leaks between the seal means (16) and the continuous extruded thermoplastic foam body (50) into the first zone (10) and is removed therefrom by said liquid removal means (14, 34); and

   (c) passing the continuous extruded thermoplastic foam body (50) from the second zone (20) to the atmosphere.

2. A process as claimed in Claim 1, further comprising the step of recirculating the liquid removed from the first zone (10) into the second zone (20).

3. A process as claimed in Claim 1, further comprising the step of discharging liquid present in a first section (120) of the first zone (10) into a second section (130) of the first zone (10).

**4.** A process as claimed in Claim 3, wherein the discharging step is performed by sufficiently angling the first section (120) of the first zone (10) so that liquid present in the first section (120) of the first zone (10) flows into the second section (130) of the first zone (10).

**5.** A process as claimed in any one of the preceding claims, further comprising the step of cooling the extruded thermoplastic foam body (50) with a fluid spray (28) prior to passing the extruded thermoplastic foam body (50) through the seal means (16) into the second zone (20).

**6.** A process as claimed in any one of the preceding claims, further comprising the step of introducing a heated gas (80) into the first zone (10).

**7.** A process as claimed in Claim 6, wherein the heated gas (80) introduced into the first zone is steam.

**8.** A thermoplastic foam body extrusion apparatus comprising:
(a) a first chamber (10);
(b) means (57) to extrude a foamable thermoplastic resin into the first chamber (10) to form a continuous extruded thermoplastic foam body (50);
(c) means (12) to maintain the first chamber at subatmospheric pressure;
(d) means (14, 34) for liquid removal from the first chamber (10);
(e) seal means (16) for passing the continuous extruded thermoplastic foam body (50) from the first chamber (10) to a liquid reservoir (20);
(f) the liquid reservoir (20), with the liquid open to the atmosphere and the liquid present in such volume so as to completely submerge the seal means (16); and
(g) means (24) for passing the continuous extruded thermoplastic foam body (50) from the liquid reservoir (20) to the atmosphere.

**9.** An apparatus as claimed in Claim 8, further comprising means (34) for recirculating the liquid removed from the first chamber (10) into the liquid reservoir (20).

**10.** An apparatus as claimed in Claim 8, further comprising means for discharging liquid present in a first section (120) of the first chamber (10) into a second section (130) of the first chamber (10) having the means (14, 34) for liquid removal from the first chamber (10).

**11.** An apparatus as claimed in Claim 10, wherein the first section (120) of the first chamber (10) is an angled first section, sufficiently angled so that liquid in the angled first section flows into the second section (130) of the first chamber (10) having the means (14, 34) for liquid removal from the first chamber (10).

**12.** An apparatus as claimed in any one of Claims 8 to 11, further comprising means for cooling the extruded thermoplastic foam body (50) with a fluid spray (28) prior to passing the extruded thermoplastic foam body (50) through the seal means (16) into the liquid reservoir (20).

**13.** An apparatus as claimed in any one of Claims 8 to 12, further comprising means for introducing a heated gas (80) into the first chamber (10).

**Revendications**

**1.** Un procédé de production d'un corps en mousse thermoplastique comprenant les étapes consistant à:
(a) extruder de façon continue dans une première zone (10) à pression inférieure à la pression atmosphérique une résine thermoplastique pouvant être transformée en mousse afin de former un corps continu en mousse thermoplastique extrudé (50), la première zone (10) comportant un moyen (14, 34) d'enlèvement de liquide et un moyen d'étanchéité (16) pour l'entrée dans une deuxième zone (20);
(b) faire passer le corps continu (50) en mousse thermoplastique extrudé depuis la première zone (10) à pression inférieure à la pression atmosphérique à travers le moyen d'étanchéité (16) vers la deuxième zone (20), la deuxième zone (20) étant un réservoir de liquide, le liquide étant à l'atmosphère, et le volume de liquide présent étant approprié pour submerger complètement le moyen d'étanchéité (16), grâce à quoi du liquide fuit, entre le moyen d'étanchéité (16) et le corps continu (50) en mousse thermoplastique extrudé, vers la première zone (10) et en est enlevé par ledit moyen (14, 34) d'enlèvement de liquide; et

(c) faire passer le corps continu (50) en mousse thermoplastique extrudé depuis la deuxième zone (20) vers l'atmosphère.

2. Un procédé selon la revendication 1, comprenant en outre l'étape consistant à remettre en circulation dans la deuxième zone (20) le liquide enlevé de la première zone (10).

3. Un procédé selon la revendication 1, comprenant en outre l'étape consistant à décharger dans une deuxième section (130) de la première zone (10) du liquide présent dans une première section (120) de la première zone (10).

4. Un procédé selon la revendication 3, dans lequel l'étape de décharge est effectuée en inclinant suffisamment la première section (120) de la première zone (10) pour que du liquide présent dans la première section (120) de la première zone (10) s'écoule dans la deuxième section (130) de la première zone (10).

5. Un procédé selon l'une quelconque des revendications précédentes, comprenant en outre l'étape consistant à refroidir le corps (50) en mousse thermoplastique extrudé à l'aide d'une pulvérisation (28) de fluide avant de faire passer dans la deuxième zone (20) à travers le moyen d'étanchéité (16) le corps (50) en mousse thermoplastique extrudé.

6. Un procédé selon l'une quelconque des revendications précédentes, comprenant en outre l'étape consistant à introduire un gaz chauffé (80) dans la première zone (10).

7. Un procédé selon la revendication 6, dans lequel le gaz chauffé (80) introduit dans la première zone est de la vapeur.

8. Un appareil d'extrusion d'un corps en mousse thermoplastique comprenant:
   (a) une première chambre (10);
   (b) un moyen (57) pour extruder dans la première chambre (10) une résine thermoplastique pouvant être transformée en mousse pour former un corps continu (50) en mousse thermoplastique extrudé ;
   (c) un moyen (12) pour maintenir la première chambre à une pression inférieure à la pression atmosphérique;
   (d) un moyen (14, 34) pour enlever du liquide de la première chambre (10);
   (e) un moyen d'étanchéité (16) pour faire passer de la première chambre (10) vers un réservoir (20) de liquide le corps continu (50) en mousse thermoplastique extrudé ;
   (f) le réservoir (20) de liquide dans lequel le liquide est à l'atmosphère et le volume de liquide présent est approprié pour submerger complètement le moyen d'étanchéité (16); et
   (g) un moyen (24) pour faire passer du réservoir (20) de liquide à l'atmosphère le corps continu en mousse thermoplastique extrudé.

9. Un appareil selon la revendication 8, comprenant en outre un moyen (34) pour remettre en circulation dans le réservoir (20) de liquide le liquide enlevé de la première chambre (10).

10. Un appareil selon la revendication 8, comprenant en outre un moyen pour décharger dans une deuxième section (130) de la première chambre (10) comportant le moyen (14, 34) d'enlèvement de liquide de la première chambre (10) du liquide présent dans une première section (120) de la première chambre (10).

11. Un appareil selon la revendication 10, dans lequel la première section (120) de la première chambre (10) est une première section inclinée, suffisamment inclinée pour que du liquide de la première section inclinée s'écoule dans la deuxième section (130) de la première chambre (10) comportant le moyen (14, 34) d'enlèvement de liquide hors de la première chambre (10).

12. Un appareil selon l'une quelconque des revendications 8 à 11, comprenant en outre un moyen pour refroidir le corps (50) en mousse thermoplastique extrudé à l'aide d'une pulvérisation (28) de fluide avant de faire passer dans le réservoir (20) de liquide à travers le moyen d'étanchéité (16) le corps (50) en mousse thermoplastique extrudé.

**13.** Un appareil selon l'une quelconque des revendications 8 à 12, comprenant en outre un moyen pour introduire un gaz chauffé (80) dans la première chambre (10).

**Patentansprüche**

**1.** Verfahren zur Herstellung eines thermoplastischen Schaumstofformkörpers, die Schritte umfassend:

a) kontinuierlich ein schäumbares thermoplastisches Harz in eine erste Zone (10) bei subatmosphärischem Druck zu extrudieren, um einen endlosen extrudierten thermoplastischen Schaumstofformkörper (50) herzustellen, wobei die erste Zone (10) ein Flüssigkeitsentfernungsmittel (14, 34) und ein Dichtungsmittel (16) für den Eintritt in eine zweite Zone (20), besitzt;

b) den endlosen extrudierten thermoplastischen Schaumstofformkörper (50) aus der ersten, auf subatmosphärischem Druck befindlichen Zone (10) in die zweite Zone (20) durch das Dichtungsmittel (16) zu befördern, wobei die zweite Zone (20) ein Flüssigkeits-Reservoir darstellt und wobei die Flüssigkeit mit der Umgebung in Kontakt steht, und in solch einer Menge vorhanden ist, daß das Dichtungsmittel (16) vollständig von der Flüssigkeit bedeckt wird, wobei Flüssigkeit zwischen dem Dichtungsmittel (16) und dem endlosen extrudierten thermoplastischen Schaumstofformkörper (50) in die erste Zone (10) leckt, und von dort durch das Flüssigkeitsentfernungsmittel (14,34) entfernt wird; und

c) den endlosen extrudierten thermoplastischen-Schaumstofformkörper (50) aus der zweiten Zone (20) in die Umgebung zu leiten.

**2.** Verfahren nach Anspruch 1, weiter den Schritt umfassend, daß die aus der ersten Zone (10) entfernte Flüssigkeit in die zweite Zone (20) zurückgeführt wird.

**3.** Verfahren nach Anspruch 1, weiter den Schritt umfassend, daß eine in einem ersten Abschnitt (120) der ersten Zone (10) vorhandene Flüssigkeit in einen zweiten Abschnitt (130) der ersten Zone (10) abgelassen wird.

**4.** Verfahren nach Anspruch 3, wobei der Ablass-Schritt durchgeführt wird, indem der erste Abschnitt (120) der ersten Zone (10) ausreichend geneigt wird, so daß die in dem ersten Abschnitt (120) der ersten Zone (10) vorhandene Flüssigkeit in den zweiten Abschnitt (130) der ersten Zone (10) fließt.

**5.** Verfahren nach einem der vorhergehenden Ansprüche, weiter den Schritt umfassend, daß der extrudierte thermoplastische Schaumstofformkörper (50), vor dem Hindurchleiten durch das Dichtungsmittel (16) in die zweite Zone (20), mit einem Fluid-Spray (28), gekühlt wird.

**6.** Verfahren nach einem der vorhergehenden Ansprüche, weiter weiter den Schritt umfassend, daß ein erhitztes Gas (80) in die erste Zone (10) eingebracht wird.

**7.** Verfahren nach Anspruch 6, bei welchem das erhitzte Gas (80), das in die erste Zone (10) eingebracht wird, Dampf ist.

**8.** Vorrichtung zur Extrusion thermoplastischer Schaumstofformkörper umfassend:

(a) eine erste Kammer (10);

(b) Mittel (57) zum Extrudieren eines schäumbaren thermoplastischen Harzes in die erste Kammer (10), um einen endlosen extrudierten thermoplastischen Schaumstofformkörper (50) auszubilden;

(c) Mittel (12) zum Aufrechterhalten eines subatmosphärischen Drucks in der ersten Kammer;

(d) Mittel (14, 34) zum Entfernen von Flüssigkeit aus der ersten Kammer (10);

(e) Dichtungsmittel (16), zum Durchleiten des endlosen extrudierten thermoplastischen Schaumstofformkörpers (50) aus der ersten Kammer (10) zu einem Flüssigkeits-Reservoir (20);

(f) das Flüssigkeits-Reservoir (20), bei welchem die Flüssigkeit mit der Umgebung in Kontakt steht, und die Flüssigkeit in solch einer Menge vorhanden ist, daß das Dichtungsmittel (16) vollständig von der Flüssigkeit bedeckt wird; und

(g) Mittel (24) zum Überführen des endlosen extrudierten thermoplastischen-Schaumstofformkörpers (50) aus dem Flüssigkeits-Reservoir (20) in die Umgebung.

**9.** Vorrichtung nach Anspruch 8, weiter umfassend Mittel (34) zur Zurückführung von aus der ersten Kammer (10) entfernten Flüssigkeit in das Flüssigkeits-Reservoir (20).

**10.** Vorrichtung nach Anspruch 8, weiter umfassend Mittel zum Abführen von Flüssigkeit, die sich in dem ersten Abschnitt (120) der ersten Kammer (10) befindet, in einen zweiten Abschnitt (130) der ersten Kammer (10), der das Mittel (14,34) zur Entfernung von Flüssigkeit aus der ersten Kammer (10) besitzt.

**11.** Vorrichtung nach Anspruch 10, wobei der erste Abschnitt (120) der ersten Kammer (10) ein geneigter erster Abschnitt ist, ausreichend geneigt, so daß Flüssigkeit in dem geneigten ersten Abschnitt in den zweite Abschnitt (130) der ersten Kammer (10) fließt, der das Mittel (14, 34) zur Entfernung von Flüssigkeit aus der ersten Kammer (10) besitzt.

**12.** Vorrichtung nach einem der Ansprüche 8 bis 11, weiter umfassend Mittel zum Kühlen des extrudierten thermoplastischen Schaumstofformkörpers (50) mit einem Fluid-Spray (28), bevor der extrudierte thermoplastische Schaumstofformkörper (50) durch das Dichtungsmittel (16) in das Flüssigkeits-Reservoir (20) geleitet wird.

**13.** Vorrichtung nach einem der Ansprüche 8 bis 12, weiter umfassend Mittel zur Einführung eines erhitzten Gases (80) in die erste Kammer (10).

Fig. 1

Fig. 2

Fig. 4

Fig. 3

EP 0 260 948 B1